# EUROPÄISCHE PATENTANMELDUNG

(11) **EP 2 685 305 A1**
(43) Veröffentlichungstag der Anmeldung: **15.01.2014**
(21) Anmeldenummer: 12005192.5
(22) Anmeldetag: 13.07.2012
(51) Int. Cl.: G02C 5/00, B32B 29/00

(54) **Laminierte Brillenfassung**

(71) Anmelder: Brugger, Michael, 39040 Vahm (IT)
(72) Erfinder: Brugger, Michael, 39040 Vahm (IT)
(74) Vertreter: Gangl, Markus

(57) **Zusammenfassung**

Verfahren zur Herstellung eines aus einer Vielzahl von Schichten (1) bestehenden Laminatkörpers (2), der zumindest einen gebogenen Bereich (3) aufweist, wobei der Laminatkörper (2) eine größer dimensionierte erste Oberfläche (4) und eine kleiner dimensionierte zweite Oberfläche (5) aufweist, wobei:
- die einzelnen Schichten (1) des Laminatkörpers (2) aus planen Materialstücken ausgeschnitten werden, wobei die Dimensionierung der einzelnen Schichten (1) so gewählt wird, dass die im Laminatkörper (2) die erste und die zweite Oberfläche (4, 5) bildenden Schichten (1) mit den Dimensionierungen der ersten und der zweiten Oberfläche (4, 5) aus den planen Materialstücken ausgeschnitten werden und die im Laminatkörper (2) zwischen der ersten und der zweiten Oberfläche (4, 5) zu positionierenden Schichten (1) mit zwischen den Dimensionierungen der ersten und der zweiten Oberfläche (4, 5) liegenden Dimensionierungen aus den planen Materialstücken ausgeschnitten werden,
- Verbinden die Vielzahl von Schichten (1) verbunden werden. Die Erfindung betrifft auch einen Laminatkörper.

## Beschreibung

Die vorliegende Erfindung betrifft ein Verfahren zur Herstellung eines aus einer Vielzahl von Schichten bestehenden Laminatkörpers mit den Merkmalen des Oberbegriffs des Anspruchs 1 und einen Laminatkörper mit den Merkmalen des Oberbegriffs des Anspruchs 9.

Insbesondere hinsichtlich ein Brillengestell bildende Laminatkörper sind bereits eine Vielzahl von Herstellungsverfahren und die entsprechenden Laminatkörper bekannt (siehe zum Beispiel US 4,255,024, US 1,968,193, GB 747 235, WO 96/08744 A1 und EP 1 754 098 B1). Es sei angemerkt, dass nicht alle der im Stand der Technik gezeigten Laminatkörper mehr als zwei Schichten und damit die bei der Erfindung vorgesehene Vielzahl von Schichten aufweisen.

Aufgabe der Erfindung ist es, ein vereinfachtes, sichereres Herstellungsverfahren für einen gattungsgemäßen Laminatkörper und einen solchen Laminatkörper bereit zu stellen.

Diese Aufgabe wird durch ein Verfahren mit den Merkmalen des Anspruchs 1 und einen Laminatkörper mit den Merkmalen des Anspruchs 9 gelöst.

Durch die Verwendung planer Materialstücke, die vorzugsweise alle dieselbe Dicke aufweisen, aus denen die einzelnen Schichten des Laminatkörpers mit jenen Dimensionierungen ausgeschnitten werden, die unter Berücksichtigung des gebogenen Bereichs ihrer Positionierung im Laminatkörper entspricht, entfällt die Notwendigkeit eines Zuschneidens des fertigen Laminatkörpers.

Würde man - so wie im Stand der Technik - die Dimensionierung aller Schichten beim Ausschneiden aus den planen Materialstücken gleich wählen, so müsste nach dem Verbinden und Verpressen der einzelnen Schichten zum Laminatkörper ein Zuschneiden erfolgen, da ja bis auf die die erste Oberfläche bildende Schicht alle Schichten durch die Biegung eine zu große Dimensionierung aufweisen. Bei diesem im Stand der Technik zwingend notwendigen Zuschneiden kann es zu einem Einreißen oder Auseinanderreißen der Schichten des Laminatkörpers und dadurch zu einer Zerstörung des Laminatkörpers kommen. Die Erfindung vermeidet dies.

Die korrekte Dimensionierung der einzelnen Schichten ergibt sich für jene Schichten, welche die erste und die zweite Oberfläche des Laminatkörpers bilden durch die gewünschte Dimensionierung der ersten und der zweiten Oberfläche. Für die im Laminatkörper zwischen der ersten und der zweiten Oberfläche zu positionierenden Schichten ergeben sich die Dimensionierungen aus der Position einer Schicht zwischen der ersten und der zweiten Oberfläche. Für eine gegebene dreidimensionale Form eines Laminatkörpers kann dies unter Berücksichtigung der gewünschten Anzahl der verwendeten Schichten durch Berechnung oder durch Versuche ermittelt werden.

Vorteilhafte Ausführungsformen der Erfindung sind in den abhängigen Ansprüchen definiert.

Bevorzugte Laminatkörper sind Brillengestelle mit bereits gebogenen Bügeln. Die Erfindung kann aber auch für andere Zwecke eingesetzt werden, zum Beispiel zur Herstellung von Kleiderbügeln, Lampenschirmen oder Möbelelementen.

Besonders bevorzugt kommt als Material für die planen Materialstücke Papier, Karton oder Pappe zum Einsatz. Dabei handelt es sich im Wesentlichen jeweils um das gleiche Material (Zellstoff oder Holzstoff), es unterscheidet sich nur die flächenbezogene Masse (Papier 7 g/m² bis 150 g/m², Karton 150 g/m² bis 600 g/m², Pappe ab 600 g/m²). Für kleinere Laminatkörper (zum Beispiel Brillengestelle) wird man eher Papier verwenden um eine Vielzahl von Schichten einsetzen zu können, für größere Laminatkörper kann man Karton oder Pappe verwenden.

Auch der Einsatz von Textilien, Kunststoffen, Metallfolien, Holz oder anderen laminierfähigen Materialien wäre denkbar.

Ausgehend von einer gewünschten Dicke des Laminatkörper können Dicke und Anzahl der Schichten festgelegt werden.

Die Resistenz des Laminatkörpers kann durch die Wahl des Materials der planen Materialstücke und der zum Verbinden der Schichten verwendeten Technik eingestellt werden.

Bevorzugt ist das Verbinden der einzelnen Schichten durch Verkleben vorgesehen. Der Kleber kann auf die einzelnen Schichten aufgespritzt, aufgedruckt, aufgerollt oder aufgestrichen werden. Vorzugsweise wird der Verbund der einzelnen Schichten durch Zusammenpressen der Schichten unmittelbar nach dem Aufbringen des Klebers während der Abbindezeit des Klebers unterstützt.

Die Schichten werden bevorzugt einzeln in eine Form eingelegt und dort verklebt und verpresst.

Auch der Einsatz anderer Verbindungstechniken ist je nach Material und Dicke der Schichten denkbar, zum Beispiel Verschrauben oder Vernieten. Es kann auch eine Kombination von Verbindungstechniken erfolgen.

Besonders bevorzugt ist vorgesehen, dass die Dimensionierungen der im Laminatkörper zwischen der ersten und der zweiten Oberfläche anzuordnenden Schichten zur Erzeugung einer Vorspannung geringfügig größer oder kleiner gewählt wird, als es der Position der Schichten zwischen der ersten und der zweiten Oberfläche entsprechen würde. Beim Ausführungsbeispiel eines elnstockigen Brillengestells mit gebogenen Bügeln kann so eine Vorspannung der Bügel zueinander hin erzeugt werden um damit einen besseren Sitz der Brille am Kopf eines Benutzers zu gewährleisten.

Das Ausschneiden der Schichten aus den planen Materialstücken kann durch jedes in Bezug auf das Material der planen Materialstücke geeignetes Verfahren erfolgen, zum Beispiel durch Stanzen, Lasern, Fräsen, Sägen, Erodieren oder Wasserstrahlschneiden.

Es kann auch die Verwendung transparenter Materialien als plane Materialstücke zur Herstellung der Schichten des Laminatkörpers vorgesehen sein. In diesem Fall kann die Verwendung eines UV-härtbaren Klebers zum Verbinden der Schichten zum Laminatkörper vorteilhaft sein.

Nach dem Verbinden und einem allfälligen Verpressen der Schichten zum Laminatkörper kann der Laminatkörper noch mit einer Schutzschicht, beispielsweise einem Schutzlack, überzogen werden, zum Beispiel um den Laminatkörper unempfindlicher gegen Witterungseinflüsse zu machen.

Beispielsweise können zwischen fünf und fünfzehn Schichten für den Laminatkörper vorgesehen sein.

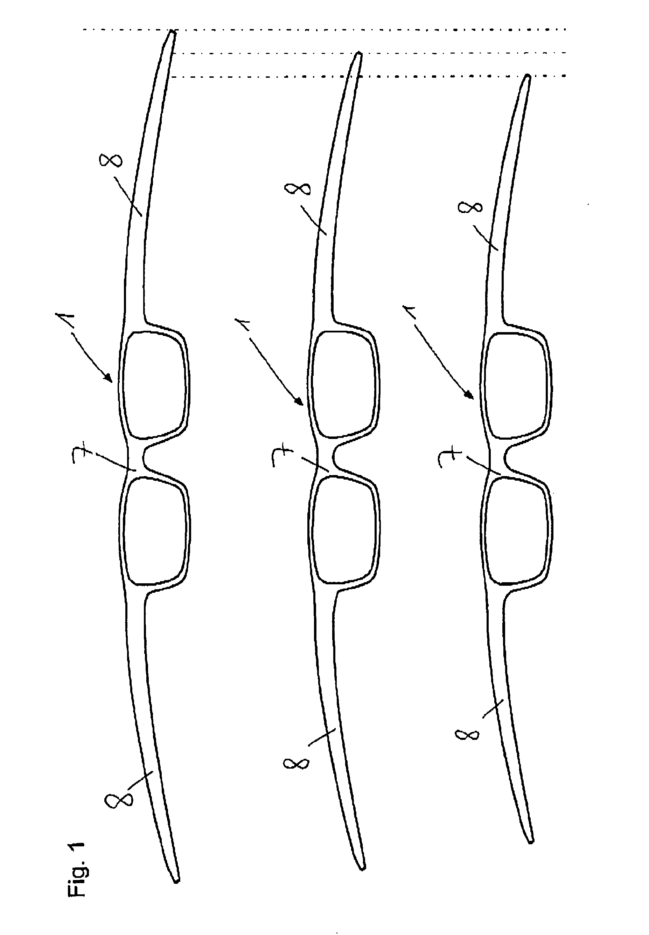

Ein Ausführungsbeispiel der Erfindung sei anhand der Figuren 1 bis 3 diskutiert.

Im vorliegenden Ausführungsbeispiel ist der Laminatkörper 2 als Brillengestell ausgebildet. Das Brillengestell ist einstückig ausgebildet und weist einen Aufnahmebereich 7 für Brillengläser und einstückig mit dem Aufnahmebereich 7 ausgebildete Bügel 8 auf. Die Bügel 8 sind über je einen gebogenen Bereich 3 mit dem Aufnahmebereich 7 für die Brillengläser verbunden und - wie oben beschrieben - mit ihren freien Enden zueinander hin vorgespannt.

Figur 1 zeigt exemplarisch drei der im Allgemeinen weit mehr Schichten 1 des Laminatkörpers 2. Bei den gezeigten Schichten 1 handelte es sich um jene Schichten, welche im Laminatkörper 2 die erste und die zweite Oberfläche 4, 5 bilden und um eine Schicht 1, welche im Laminatkörper 2 zwischen der ersten und der zweiten Oberfläche 4, 5 liegt.

Erkennbar ist die (übertrieben dargestellte) unterschiedliche Dimensionierung der Schichten 1. Die in Figur 1 oberste Schicht 1 weist die größte Dimensionierung auf, das sie im Laminatkörper 1 die erste Oberfläche 4 bildet. Die in Figur 1 unterste Schicht 1 weist die kleinste Dimensionierung auf, da sie im Laminatkörper 1 die zweite Oberfläche bildet. Die in Figur 1 mittlere Schicht 1 weist eine Dimensionierung auf, die zwischen jener der oberen und der unteren Schicht 1 liegt, da sie im Laminatkörper 1 zwischen diesen Schichten 1 zu positionieren ist.

Die unterschiedliche Dimensionierung betrifft nur die Bügel 8. Diese sind ausgehend von der größten Schicht 1 kleiner skaliert. Die Aufnahmebereiche 7 für die Brillengläser sind (bis auf die Nuten für die Brillengläser - siehe unten) bei allen Schichten 1 gleich groß ausgebildet.

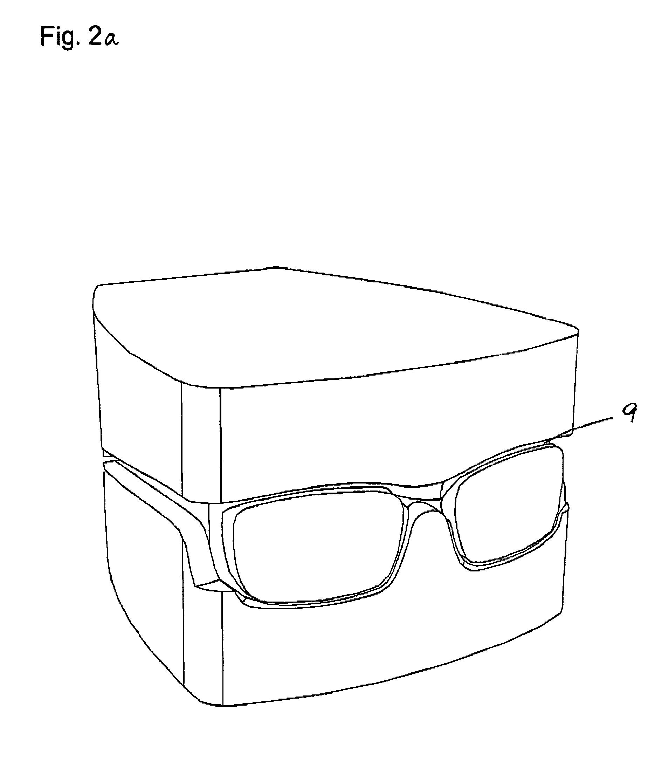

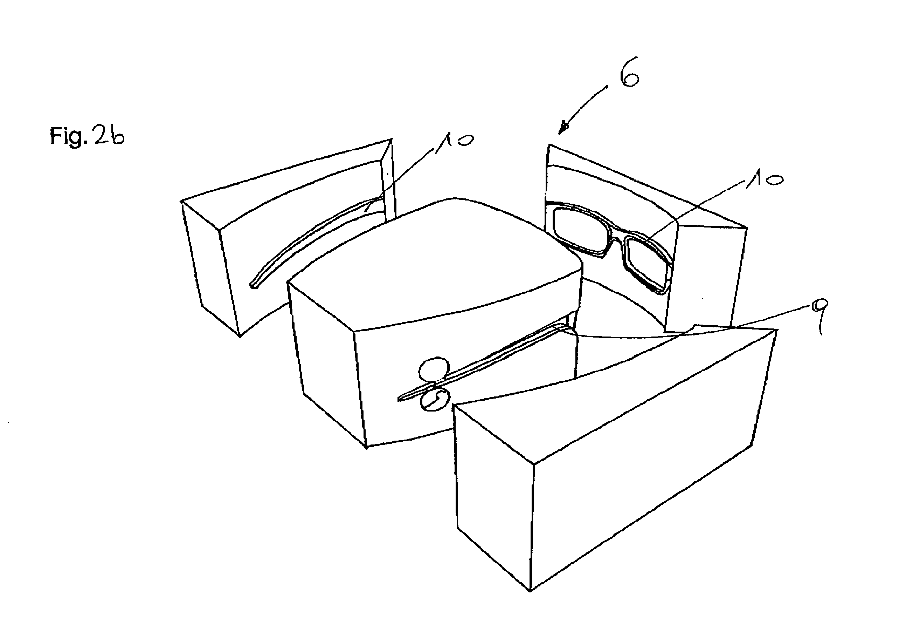

Figur 2a zeigt eine perspektivische Ansicht eines Teils einer mehrteiligen Form 6 zum Verbinden und Verpressen der Schichten 1 zum Laminatkörper 2. In den Hohlraum 9 können die einzelnen Schichten 1 eingelegt werden. Figur 2b zeigt eine weitere perspektivische Ansicht, wobei hier alle Teile der mehrteiligen Form 6 erkennbar sind. Durch die Vorsprünge 10 können die in den Hohlraum 9 eingelegten Schichten 1 bis zum Aushärten des Klebers verpresst werden.

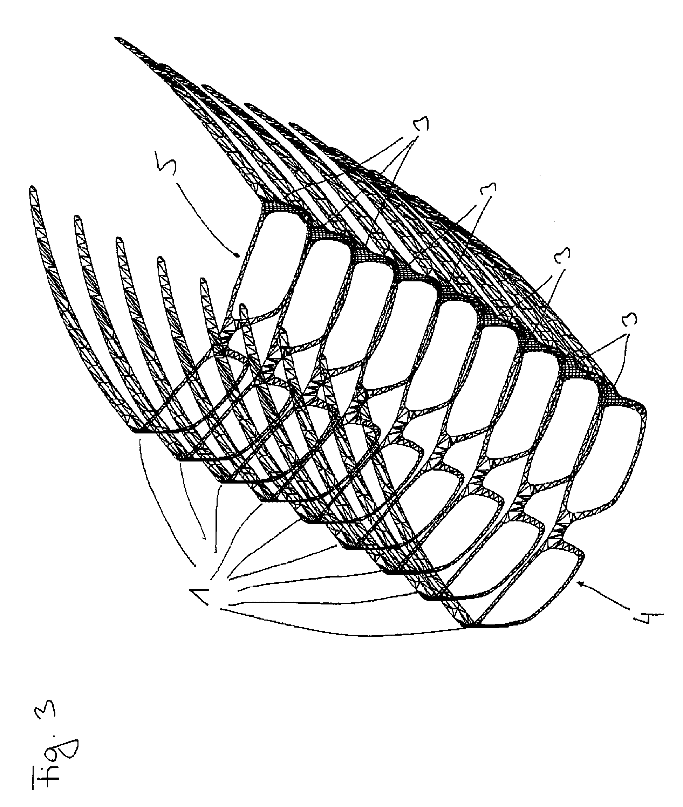

Figur 3 zeigt eine Explosionsdarstellung eines mit den Schichten 1 nach Figur 1 gebildeten Laminatkörpers 2, wobei alle Schichten 1 des Laminatkörpers 2 (hier beispielhaft neun Schichten 1) dargestellt sind. In Figur 3 ist außerdem erkennbar, dass in den inneren Schichten 1 die Löcher für die Brillengläser größer ausgebildet sind als bei den äußeren Schichten 1. Hierdurch ergeben sich Nuten für die Brillengläser.

## Patentansprüche

1. Verfahren zur Herstellung eines aus einer Vielzahl von Schichten (1) bestehenden Laminatkörpers (2), der zumindest einen gebogenen Bereich (3) aufweist, wobei der Laminatkörper (2) eine größer dimensionierte erste Oberfläche (4) und eine kleiner dimensionierte zweite Oberfläche (5) aufweist, **gekennzeichnet durch**:
- Ausschneiden der einzelnen Schichten (1) des Laminatkörpers (2) aus planen Materialstücken, wobei die Dimensionierung der einzelnen Schichten (1) so gewählt wird, dass die im Laminatkörper (2) die erste und die zweite Oberfläche (4, 5) bildenden Schichten (1) mit den Dimensionierungen der ersten und der zweiten Oberfläche (4, 5) aus den planen Materialstücken ausgeschnitten werden und die im Laminatkörper (2) zwischen der ersten und der zweiten Oberfläche (4, 5) zu positionierenden Schichten (1) mit zwischen den Dimensionierungen der ersten und der zweiten Oberfläche (4, 5) liegenden Dimensionierungen aus den planen Materialstücken ausgeschnitten werden,
- Verbinden der Vielzahl von Schichten (1).

2. Verfahren nach Anspruch 1, **dadurch gekennzeichnet, dass** die Schichten (1) vorzugsweise einzeln in eine Form (6) eingelegt und in der Form (6) verbunden werden.

3. Verfahren nach Anspruch 1 oder 2, **dadurch gekennzeichnet, dass** die Vielzahl von Schichten (1) vorzugsweise nach dem Verbinden verpresst werden.

4. Verfahren nach einem der Ansprüche 1 bis 3, **dadurch gekennzeichnet, dass** die Dimensionierungen der im Laminatkörper (2) zwischen der ersten und der zweiten Oberfläche (4, 5) anzuordnenden Schichten (1) zur Erzeugung einer Vorspannung geringfügig größer oder kleiner gewählt wird, als es der Position der Schichten (1) zwischen der ersten und der zweiten Oberfläche (4, 5) entsprechen würde.

5. Verfahren nach einem der Ansprüche 1 bis 4, **dadurch gekennzeichnet, dass** das Verbinden der Vielzahl von Schichten (1) durch Verkleben erfolgt.

6. Verfahren nach einem der Ansprüche 1 bis 5, **dadurch gekennzeichnet, dass** als plane Materialstücke Papier, Karton oder Pappe verwendet werden.

7. Verfahren nach einem der Ansprüche 1 bis 6, **dadurch gekennzeichnet, dass** als Laminatkörper (2) ein einstückiges Brillengestell mit gebogenen Bügeln (8), die über den gebogenen Bereich (3) mit einem Aufnahmebereich (7) für Brillengläser verbunden sind, hergestellt wird.

8. Verfahren nach Anspruch 7, **dadurch gekennzeichnet, dass** bei der Dimensionierung der zwischen der ersten und der zweiten Oberfläche (4, 5) liegenden Schichten (1) Nuten für Brillengläser berücksichtigt werden.

9. Laminatkörper (2), mit einer Vielzahl von flächig miteinander verbundenen Schichten (1), wobei der Laminatkörper (2) zumindest einen gebogenen Bereich (3) aufweist, wobei der gebogene Bereich (3) eine größer dimensionierte erste Oberfläche (4) und eine kleiner dimensionierte zweite Oberfläche (5) aufweist, **dadurch gekennzeichnet, dass** die einzelnen Schichten (1) des Laminatkörpers (2) so dimensioniert sind, dass die die erste und die zweite Oberfläche (4, 5) bildenden Schichten (1) die Dimensionierungen der ersten und der zweiten Oberfläche (4, 5) aufweisen und die zwischen der ersten und der zweiten Oberfläche (4, 5) angeordneten Schichten (1) Dimensionierungen aufweisen, die zwischen den Dimensionierungen der ersten und der zweiten Oberfläche (4, 5) liegen.

10. Laminatkörper nach Anspruch 9, **dadurch gekennzeichnet, dass** der Laminatkörper (2) aus Papier, Karton oder Pappe besteht.

11. Laminatkörper nach Anspruch 9 oder 10, **dadurch gekennzeichnet, dass** der Laminatkörper (2) ein einstückiges Brillengestell mit Bügeln (8) ist, die über den gebogenen Bereich (3) mit einem Aufnahmebereich (7) für Brillengläser verbunden sind.

12. Laminatkörper nach einem der Ansprüche 9 bis 11, **dadurch gekennzeichnet, dass** der Laminatkörper (2) zwischen fünf und fünfzehn Schichten (1) aufweist.
